(19) Europäisches Patentamt
European Patent Office
Office européen des brevets

(11) EP 4 800 766 A1

(12) EUROPEAN PATENT APPLICATION
published in accordance with Art. 153(4) EPC

(43) Date of publication:
**02.09.2026 Bulletin 2026/36**

(21) Application number: **24890030.0**

(22) Date of filing: **24.05.2024**

(51) International Patent Classification (IPC):
***H01M 4/38*** *(2006.01)* ***H01M 10/0525*** *(2010.01)*

(52) Cooperative Patent Classification (CPC):
**H01M 4/134; H01M 4/36; H01M 4/38; H01M 4/62; H01M 10/052; H01M 10/0525;** Y02E 60/10

(86) International application number:
**PCT/CN2024/095179**

(87) International publication number:
**WO 2025/102659 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2023 CN 202311523761**

(71) Applicant: **Contemporary Amperex Technology Co., Limited**
**Ningde, Fujian 352100 (CN)**

(72) Inventors:
- **WU, Kai**
  **Ningde, Fujian 352100 (CN)**
- **DENG, Jingxian**
  **Ningde, Fujian 352100 (CN)**
- **WANG, Jiazheng**
  **Ningde, Fujian 352100 (CN)**
- **LV, Zijian**
  **Ningde, Fujian 352100 (CN)**
- **CHEN, Wenqiang**
  **Ningde, Fujian 352100 (CN)**
- **LIU, Liangbin**
  **Ningde, Fujian 352100 (CN)**
- **XIE, Shuai**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

# (54) SILICON-CARBON NEGATIVE ELECTRODE MATERIAL, PREPARATION METHOD THEREFOR, NEGATIVE ELECTRODE PIECE, ELECTRODE, AND ELECTRIC DEVICE

(57) The present application relates to the field of batteries and provides a silicon-carbon negative electrode material, a preparation method therefor, a negative electrode piece, an electrode, and an electric device. The silicon-carbon negative electrode material comprises porous carbon and silicon particles attached to the pore walls of the porous carbon, a crystal phase being present in the silicon particles, crystallinity being at least 90%, and the average crystal grain size of the silicon particles being less than 4 nm. The silicon-carbon negative electrode material can allow batteries to obtain better cycle stability and high initial Coulombic efficiency.

Embodiment
700
600
500
400
300
200
100
0
PSD
20.0001
30.0001
40.0001
50.0001
60.0001
70.0001
80.0001
90.0001
Angle

FIG. 5

EP 4 800 766 A1

## Description

## CROSS-REFERENCE TO RELATED APPLICATIONS

The present application claims priority to Chinese Patent Application No. 202311523761.0, entitled "SILICON-CARBON NEGATIVE ELECTRODE MATERIAL AND PREPARATION METHOD THEREFOR, NEGATIVE ELECTRODE PLATE, ELECTRODE, AND POWER CONSUMING APPARATUS" and filed on November 15, 2023, which is incorporated herein by reference in its entirety.

## TECHNICAL FIELD

The present application relates to the field of batteries, and in particular, to a silicon-carbon negative electrode material and a preparation method therefor, a negative electrode plate, an electrode, and a power consuming apparatus.

## BACKGROUND

Silicon is a high-specific-capacity material that can be used as a negative electrode material, a theoretical capacity of which can be 10 or more times of that of a current mainstream graphite negative electrode. Meanwhile, silicon has high safety, abundant resource reserves, and low manufacturing costs. However, a carbon material has high conductivity and a relatively stable structure, has small volume expansion which is usually below 10% in a cycling process, and further has good flexibility and lubricity. If a silicon-carbon negative electrode material can integrate the advantages of silicon and carbon, the performance of a secondary battery may be greatly improved.

However, at present, although the capacity of a gas-phase synthesized silicon-carbon material is improved compared with the capacity in a conventional technology, the first coulombic efficiency of the material is low. To improve the first coulombic efficiency of the silicon-carbon negative electrode material, the cycling stability is sacrificed. That is, after the existing silicon-carbon negative electrode material is applied to a battery, good cycling stability and high first coulombic efficiency cannot be balanced.

## SUMMARY

In view of the foregoing problem, the present application provides a silicon-carbon negative electrode material and a preparation method therefor, a negative electrode plate, an electrode, and a power consuming apparatus, which can improve a technical problem that a battery cannot obtain both good cycling stability and high first coulombic efficiency.

In a first aspect, an embodiment of the present application provides a silicon-carbon negative electrode material, including porous carbon and silicon particles attached to pore walls of the porous carbon. A crystal phase exists in the silicon particles and a degree of crystallinity is at least 90%. An average grain size of the silicon particles is less than 4 nm.

In the silicon-carbon negative electrode material provided in the present application, due to the existence of the crystal phase (i.e. crystalline silicon) in the silicon particles and the degree of crystallinity of at least 90%, first coulombic efficiency of a battery can be effectively improved compared with first coulombic efficiency of amorphous silicon. By attaching the silicon particles to the pore walls of the porous carbon and making the average grain size of the silicon particles less than 4 nm, in one aspect, differences in expansion forces of the crystalline silicon in directions are relieved and reduced by using the limitation on the average grain size of the silicon particles, which is conductive to relieving and improving cycling stability of the battery. In another aspect, each pore can reserve some space to buffer volume expansion of the silicon particles. This can further improve cycling performance of the battery using this negative electrode material.

That is, the silicon-carbon negative electrode material provided in the present application can enable the battery to obtain both good cycling stability and high first coulombic efficiency.

In some embodiments, the average grain size of the silicon particles is less than 2 nm. Within the above range, it is conductive to reducing the differences in the expansion forces of the crystalline silicon in the directions and further improving the cycling performance of the battery.

In some embodiments, an average pore size of the porous carbon is less than or equal to 4 nm, and optionally, the average pore size of the porous carbon is less than or equal to 2 nm. It is conductive to improving the cycling performance of the battery using this negative electrode material.

In some embodiments, the porous carbon satisfies at least one of the following features:

(a1) the porous carbon has a micropore, a mesopore, and a macropore, and a volume proportion that the micropore accounts for is greater than or equal to 75%;
(a2) a specific surface area of the porous carbon is greater than or equal to 1700 $m^2/g$; and
(a3) a pore volume of the porous carbon is greater than or equal to 0.75 $m^3/g$.

Optionally, the porous carbon satisfies at least one of the following features:

(b1) the porous carbon has a micropore, a mesopore, and a macropore, and a volume proportion that the micropore accounts for is greater than or equal to 85%;
(b2) a specific surface area of the porous carbon is greater than or equal to 1800 $m^2/g$; and
(b3) a pore volume of the porous carbon is greater than or equal to 0.8 $m^3/g$.

Within the above ranges, it is conductive to enabling the battery using this negative electrode material to obtain good capacity, coulombic efficiency, and cycling performance.

In some embodiments, the porous carbon and the silicon particles are both used as a body, and the silicon-carbon negative electrode material further includes a carbon coating layer that coats the body. The carbon coating layer is used to coat a surface of the body. In one aspect, pores are sealed to obtain sealed pores, thereby preventing an external electrolyte from entering the internal pores, reducing the specific surface area, and reducing a loss of active lithium during formation of a solid electrolyte interface (SEI) film on a surface of the silicon-carbon negative electrode material. In another aspect, this can prevent problems such as a decrease in the first coulombic efficiency of the battery due to a capacity loss caused by oxidization of silicon on the surface of the material.

In some embodiments, the carbon coating layer is discontinuously coated, and a thickness of the carbon coating layer ranges from 1 nm to 40 nm.

In some embodiments, the silicon-carbon negative electrode material satisfies at least one of the following features:

(c1) mass content of the silicon particles in the silicon-carbon negative electrode material ranges from 35% to 55%;
(c2) a porosity of the silicon-carbon negative electrode material ranges from 40% to 60%;
(c3) a specific surface area of the silicon-carbon negative electrode material is less than or equal to 6 $m^2/g$; and
(c4) a volume particle size distribution Dv50 of the silicon-carbon negative electrode material ranges from 4 μm to 15 μm.

Within the above ranges, it is conductive to enabling the battery using this negative electrode material to have good capacity, coulombic efficiency, and cycling performance. In some embodiments, the silicon-carbon negative electrode material satisfies at least one of the following features:

(d1) mass content of the silicon particles in the silicon-carbon negative electrode material ranges from 40% to 50%;
(d2) a porosity of the silicon-carbon negative electrode material ranges from 45% to 55%;
(d3) a specific surface area of the silicon-carbon negative electrode material is less than or equal to 4 $m^2/g$; and
(d4) a volume particle size distribution Dv50 of the silicon-carbon negative electrode material ranges from 5 μm to 10 μm.

Within the above ranges, it is conductive to enabling the battery using this negative electrode material to have good capacity, coulombic efficiency, and cycling performance.

In a second aspect, the present application provides a preparation method for the silicon-carbon negative electrode material in the above embodiment, including: depositing the silicon particles on the porous carbon by using a chemical vapor deposition method. An average pore size of the porous carbon is less than or equal to 4 nm.

In this technical solution of this embodiment of the present application, the silicon particles are deposited on the porous carbon by using the chemical vapor deposition method. The silicon particles are deposited into pores of the porous carbon, so a maximum grain size of the silicon particles is less than a pore size of the porous carbon, and the average grain size of the silicon particles is less than an average pore size of the porous carbon. Therefore, by using the average pore size of the porous carbon that is less than or equal to 4 nm, the average grain size of the silicon particles can be controlled to be less than 4 nm. This enables the battery to obtain both good cycling stability and high first coulombic efficiency after the obtained silicon-carbon negative electrode material is applied to a battery.

In some embodiments, a manner of depositing the silicon particles on the porous carbon by using a chemical vapor deposition method includes:
placing the porous carbon in a reaction atmosphere and carrying out heat preservation reaction at 400°C to 550°C for at least 8 h. The reaction atmosphere is a mixed atmosphere of a protective gas and a silicon source gas. A gas flow ratio of the protective gas to the silicon source gas is 90:10 to 70:30. The protective gas includes at least one of an inert gas and hydrogen. By adjusting the temperature, the gas flow ratio, and the heat preservation duration to be within the above ranges, to control decomposition efficiency and a deposition speed of the silicon source gas, in one aspect, it is conductive to uniformly distributing the silicon particles in the pore channels of the porous carbon. In another aspect, it is conductive to generating the crystalline silicon and suppressing generation of non-capacitive silicon carbide or excessive amorphous

silicon.

Optionally, a temperature of the heat preservation reaction ranges from 430°C to 530°C.

Optionally, the gas flow ratio of the protective gas to the silicon source gas is 85:15 to 75:25.

Optionally, duration of the heat preservation reaction ranges from 8 h to 16 h, optionally, from 10 h to 16 h.

In some embodiments, the preparation method further includes: using a product obtained through depositing the silicon particles on the porous carbon as a body, placing the body in a mixed atmosphere of a carbon source and an inert gas, and pyrolyzing the carbon source to form a carbon coating layer that coats the body.

The carbon source includes one or more of an alkane, an alkyne, and an alkene.

By the above disposing, a carbon coating layer that is uniformly distributed can be formed on a surface of the body, which improves stability of a material interface and reduces the specific surface area. It is conductive to enabling the battery to have both good first coulombic efficiency and good cycling performance.

Optionally, a temperature of pyrolyzing the carbon source ranges from 400°C to 800°C, and pyrolysis duration ranges from 0.2 h to 2 h.

Optionally, a gas flow ratio of the inert gas to the carbon source is 1:(1.5 to 5).

In a third aspect, the present application provides a negative electrode plate, including the silicon-carbon negative electrode material in the above embodiment.

In a fourth aspect, the present application provides a battery, including the battery cell in the above embodiment.

In a fifth aspect, the present application provides a power consuming apparatus, including the battery in the above embodiment. The battery is configured to provide electric energy.

The foregoing descriptions are merely an overview of the technical solutions of the present application. To learn technical means of the present application more clearly so that the technical solutions can be implemented according to content of the specification, and to make the foregoing and other objectives, features, and advantages of the present application understood more clearly, specific implementations of the present application are described below.

## BRIEF DESCRIPTION OF THE DRAWINGS

Various other advantages and benefits will become apparent to those of ordinary skill in the art upon reading the following detailed description of preferred implementations. The drawings are for the purpose of illustrating the preferred implementations only and are not to be considered as a limitation on the present application. Furthermore, the same components are denoted by the same reference numerals throughout the drawings. In the accompanying drawings:

FIG. 1 is a schematic diagram of a structure of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is a schematic diagram of a structure of a negative electrode plate according to some embodiments of the present application;
FIG. 5 is an XRD pattern of a silicon-carbon negative electrode material provided in Embodiment 1;
FIG. 6 is an XRD pattern of a silicon-carbon negative electrode material provided in Comparative Example 1; and
FIG. 7 is an XRD pattern of a silicon-carbon negative electrode material provided in Comparative Example 2.

Reference numerals in the specific implementations are as follows:

1000: vehicle;
100: battery; 200: controller; 300: motor;
10: box body; 11: first part; 12: second part;
20: battery cell; 21: shell; 22: electrode assembly; 23: electrode terminal; 24: pressure relief structure;
211: case; 212: cover body;
221: negative electrode plate; 2211: negative electrode current collector; 2212: negative electrode tab; and 2213: negative electrode active material layer.

## DETAILED DESCRIPTION

Embodiments of the technical solutions of the present application will be described below in detail with reference to the accompanying drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meaning as commonly understood by those skilled in the art of the present application. The terms used herein are intended only for the purpose of describing specific embodiments and are not intended to limit the present application. The terms "include" and "has/have", as well as any variations thereof, in the specification and claims of the present application, as well as the description of accompanying drawings, are intended to encompass non-exclusive inclusion.

In the description of the embodiments of the present application, the technical terms "first", "second", and the like are only for distinguishing different objects, and may not be understood as indicating or implying the relative importance or implicitly indicating the number, specific order or primary and secondary relations of the technical features indicated. In the description of the embodiments of the present application, "plurality" means two or more, unless otherwise expressly and specifically defined.

Reference to "an embodiment" herein means that a particular feature, structure or characteristic described in conjunction with an embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the descriptions of the embodiments of the present application, the term "and/or" only describes an association relation of associated objects and represents that three relations may exist. For example, A and/or B may represent three situations: A exists alone; A and B exist simultaneously; and B exists alone. In addition, the character "/" herein usually indicates an "or" relation between previous and next associated objects.

In the descriptions of the embodiments of the present application, the term "plurality" refers to more than two (including two), and similarly, "a plurality of groups" refers to more than two groups (including two groups); and "a plurality of sheets" refers to more than two sheets (including two sheets).

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated need to have particular orientations, and be constructed and operated in the particular orientations, so that these terms are not construed as limiting the embodiments of the present application.

In the descriptions of the embodiments of the present application, unless otherwise expressly specified and limited, the technical terms "mount," "connect", "connection", "fix" and the like should be understood in a broad sense, such as, a fixed connection, a detachable connection, an integrated connection, a mechanical connection, an electrical connection, a direct connection, an indirect connection through an intermediate medium, an internal communication of two elements, or interaction between two elements. Those of ordinary skill in the art can understand the specific meanings of the above terms in the embodiments of the present application according to specific situations.

To alleviate the problem that a battery using an existing silicon-carbon negative electrode material cannot have both good cycling stability and high first coulombic efficiency, the present application designs a silicon-carbon negative electrode material, and the silicon-carbon negative electrode material includes porous carbon and silicon particles attached to pore walls of the porous carbon. A crystal phase exists in the silicon particles and a degree of crystallinity is at least 90%. An average grain size of the silicon particles is less than 4 nm.

In this silicon-carbon negative electrode material, due to the existence of the crystal phase (i.e. crystalline silicon) in the silicon particles and the degree of crystallinity of at least 90%, first coulombic efficiency of a battery can be effectively improved compared with first coulombic efficiency of amorphous silicon. Since the average grain size of the silicon particles is less than 4 nm, cycling stability of the battery can be effectively improved. Meanwhile, the silicon particles are attached to the pore walls of the porous carbon, so that each pore can reserve some space to buffer volume expansion of the silicon particles. This can further improve cycling performance of the battery.

The battery disclosed in the embodiments of the present application can be applied to, but is not limited to, power consuming apparatuses such as a vehicle, a ship, or an aircraft. A power system of the power consuming apparatus that includes the battery and other components disclosed in the present application can be used, which is conductive to relieving and improving the first coulombic efficiency and cycling performance of the battery.

An embodiment of the present application provides a power consuming apparatus using a battery as a power source. The power consuming apparatus may be, but is not limited to, a mobile phone, a tablet, a laptop, an electric toy, an electric tool, a battery car, an electric automobile, a ship, a spacecraft, or the like. The electric toy may include fixed or mobile electric toys, such as a game machine, an electric vehicle toy, an electric ship toy, and an electric airplane toy. The spacecraft may include an airplane, a rocket, a space shuttle, a spaceship, and the like.

For ease of description in the following embodiments, an embodiment in which a power consuming apparatus in an embodiment of the present application is a vehicle 1000 is used for description.

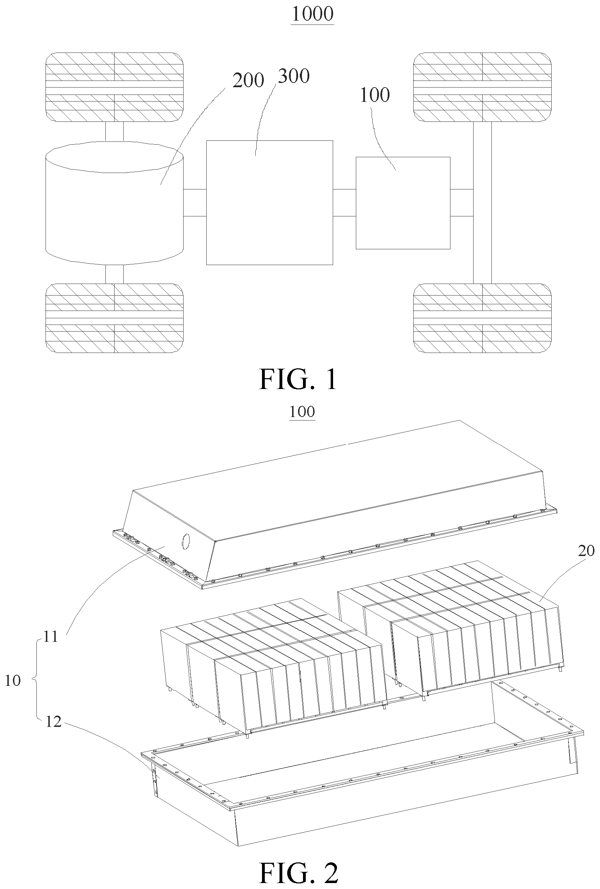

Referring to FIG. 1, FIG. 1 is a schematic diagram of a structure of a vehicle 1000 according to some

embodiments of the present application. The vehicle 1000 may be a fuel vehicle, a gas vehicle, or a new energy vehicle, and the new energy vehicle may be an allelectric vehicle, a hybrid electric vehicle, an extended-range vehicle, or the like. A battery 100 is arranged inside the vehicle 1000. The battery 100 may be arranged at a bottom or head or tail of the vehicle 1000. The battery 100 may be configured to power the vehicle 1000. For example, the battery 100 may be used as an operating power source of the vehicle 1000. The vehicle 1000 may further include a controller 200 and a motor 300. The controller 200 is configured to control the battery 100 to supply power to the motor 300, for example, to meet a demand for working power during starting, navigation, and driving of the vehicle 1000.

In some embodiments of the present application, the battery 100 not only may serve as the operating power source of the vehicle 1000, but also may serve as a driving power source of the vehicle 1000, thus replacing or partially replacing fuel or natural 10 gas to provide driving power for the vehicle 1000.

In the present application, the battery 100 refers to a single physical module that includes one or more battery cells 20 to provide a particular voltage and capacity, and may be in a form of a battery pack, a battery module, or the like. The battery 100 may further include a box body 10 for packaging one or more battery cells 20. The box body 10 may prevent liquid or another foreign object from affecting charging or discharging of the battery cell 20.

Referring to FIG. 2, FIG. 2 is an exploded diagram of a battery 100 according to some embodiments of the present application. The battery 100 includes a box body 10 and a battery cell 20. The battery cell 20 is accommodated in the box body 10. The box body 10 is configured to provide an accommodating space for the battery cell 20, and the box body 10 may be of various structures. In some embodiments, the box body 10 may include a first part 11 and a second part 12. The first part 11 and the second part 12 are covered by each other. The first part 11 and the second part 12 jointly define an accommodating space for accommodating the battery cell 20. The second part 12 may be of a hollow structure with an opening in one end. The first part 11 may be of a plate-like structure. The first part 11 covers the opening side of the second part 12, so that the first part 11 and the second part 12 jointly define the accommodating space. Or, each of the first part 11 and the second part 12 may be of a hollow structure with an opening in one end, and the opening side of the first part 11 covers the opening side of the second part 12. Certainly, the box body 10 formed by the first part 11 and the second part 12 may be in various shapes, such as a cylinder or a cuboid.

In the battery 100, there may be a plurality of battery cells 20. The plurality of battery cells 20 may be connected in series or in parallel or be in parallel-series connection. The parallel-series connection means that the plurality of battery cells 20 are connected in both series and parallel. The plurality of battery cells 20 may be directly connected in series or in parallel or be in parallel-series connection, and the whole including the plurality of battery cells 20 is then accommodated in the box body 10. Certainly, the battery 100 may alternatively be in the form of a battery module composed of a plurality of battery cells 20 that are connected in series or in parallel or are in parallel-series connection, and then a plurality of battery modules are connected in series or in parallel or are in parallel-series connection to form a whole which is accommodated in the box body 10. The battery 100 may further include other structures. For example, the battery 100 may further include a busbar component for electrically connecting the plurality of battery cells 20.

The battery cell 20 is a smallest unit constituting the battery 100. The battery cell 20 may be a lithium-ion battery.

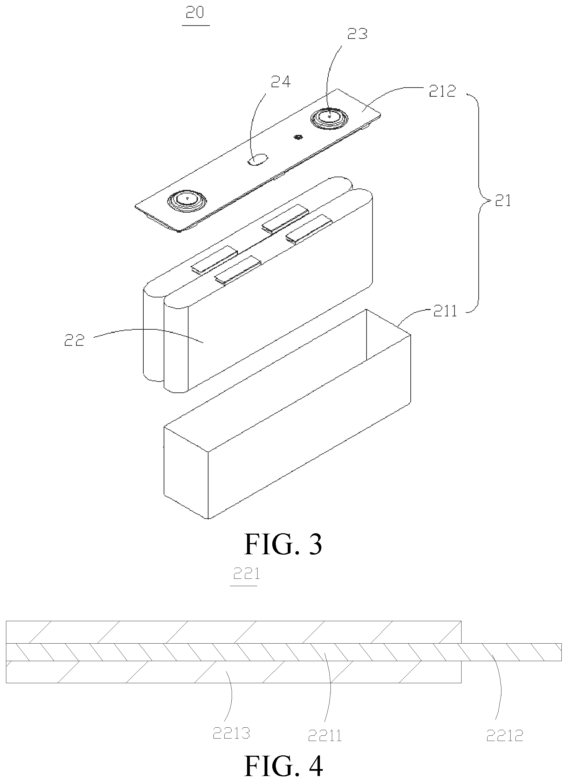

Referring to FIG. 3, FIG. 3 is a schematic diagram of an exploded structure of a battery cell 20 according to some embodiments of the present application. Referring to FIG. 3, the battery cell 20 may include a shell 21, an electrode assembly 22, and an electrolyte. Both the electrode assembly 22 and the electrolyte are accommodated in the shell 21.

The shell 21 may include a case 211 and a cover body 212. The case 211 is an assembly for cooperating with the cover body 212 to form an inner sealed space of the battery cell 20. The formed sealed space may be configured to accommodate the electrode assembly 22, the electrolyte, and other components. The cover body 212 is a component that covers an opening of the case 211 to isolate an internal environment of the battery cell 20 from an external environment. A shape of the cover body 212 may be adapted to a shape of the case 211 to cooperate with the case 211. Functional components such as an electrode terminal 23 and a pressure relief structure 24 may be further disposed on the cover body 212. A sealing ring may be configured between the opening of the case 211 and the cover body 212, to implement sealing between the case 211 and the cover body 212.

The case 211 and the cover body 212 may be of various shapes and various sizes, for example, a cuboid, a cylinder, and a hexadecagonal prism. Specifically, the shape of the case 211 and the shape of the cover body 212 may be determined according to a specific shape and size of the electrode assembly 22. The case 211 and the cover body 212 may be made of various materials, for example, but not limited to, a metal such as copper, iron, aluminum, stainless steel, or an aluminum alloy. The sealing ring may be made of various materials, for example, but not limited to, a material that is resistant to corrosion by the electrolyte, is highly flexible, and is resistant to fatigue, such as polypropylene (PP), polycarbonate (PC), and polyethylene terephthalate (PET). A coating layer may be formed on an outer surface of the case 211. The coating layer may be made of various materials, for example, but not limited to, a corrosion-resistant material such as Ni or Cr.

The battery cell 20 may alternatively be in a form of a soft packet, for example, a pouch-type soft packet. A material of the soft package may be plastic, and examples of plastic may include polypropylene, polybutylene terephthalate, polybutylene succinate, and the like.

The electrode assembly 22 includes a negative electrode plate, a separator, and a positive electrode plate. The battery cell 20 works mainly relying on the movement of metal ions between the positive electrode plate and the negative electrode plate. During charging and discharging, active ions shuttle between the positive electrode plate and the negative electrode plate, undergoing repeated intercalation and deintercalation. The separator is arranged between the positive electrode plate and the negative electrode plate, and mainly functions to prevent a positive electrode and a negative electrode from short-circuiting and allow the ion to pass through. The electrode assembly 22 may be of a wound structure or a laminated structure. The embodiments of the present application do not impose a limitation on this.

The positive electrode plate includes a positive electrode current collector, a positive electrode tab, and a positive electrode active material layer. The positive electrode active material layer is arranged on at least one side of the positive electrode current collector. A primer coating and the like may be further arranged between the positive electrode active material layer and the positive electrode current collector. The positive electrode tab protrudes out of the positive electrode current collector, and the positive electrode tab is, for example, located at one end or two opposite ends of the positive electrode current collector.

The positive electrode current collector may employ a metal foil or a composite current collector. For example, materials of the positive electrode current collector and the positive tab may be aluminum. The composite current collector may include a high molecular material substrate layer and a metal layer formed on at least one side of the high molecular material substrate layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some implementations, the positive electrode active material layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some implementations, the positive electrode active material layer may further optionally include a conductive agent. For example, the conductive agent may include at least one of superconducting carbon, acetylene black, carbon black, Ketjen black, carbon dots, carbon nanotubes, graphene, and carbon nanofibers.

The separator is located between the positive electrode plate and the negative electrode plate, and plays a separation role. The embodiments of the present application do not impose a particular limitation on a type of the separator, and any well-known separator with a porous structure having good chemical stability and mechanical stability may be selected.

In some implementations, a material of the separator may be at least one of a glass fiber, a non-woven fabric, polyethylene, polypropylene, and polyvinylidene fluoride. The separator may be a single-layer film or a multilayer composite film, without special limitations. When the separator is a multilayer composite film, materials of layers may be the same or different, without special limitations.

As shown in FIG. 4, the negative electrode plate 221 includes a negative electrode current collector 2211, a negative electrode tab 2212, and a negative electrode active material layer 2213. The negative electrode active material layer 2213 is arranged on at least one side of the negative electrode current collector 2211. A primer coating and the like may be further arranged between the negative electrode current collector 2211 and the negative electrode active material layer 2213. The negative electrode tab 2212 protrudes out of the negative electrode current collector 2211, and the negative electrode tab 2212 is, for example, located at one end or two opposite ends of the negative electrode current collector 2211.

The negative electrode current collector 2211 may employ a metal foil or a composite current collector. For example, materials of the negative electrode current collector 2211 and the negative electrode tab 2212 may be copper. The composite current collector may include a high molecular material substrate layer and a metal layer formed on at least one side of the high molecular material substrate layer. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

A negative electrode active material in the negative electrode active material layer 2213 includes a silicon-carbon negative electrode material.

In some implementations, the negative electrode active material layer 2213 may further optionally include a binder. The binder may be selected from at least one of styrenebutadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some implementations, the negative electrode active material layer 2213 may further optionally include a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode active material layer 2213 further optionally includes another additive, such as a thickener (e.g. sodium carboxymethyl cellulose (CMC-Na)).

The following will describe a silicon-carbon negative electrode material and a preparation method therefor that are provided in the embodiments of the present application in detail below with reference to the accompanying drawings.

According to some embodiments of the present application, the silicon-carbon negative electrode material includes porous carbon and silicon particles attached to pore walls of the porous carbon. A crystal phase exists in the silicon particles and a degree of crystallinity is at least 90%. An average grain size of the silicon particles is less than 4 nm.

The porous carbon includes, but is not limited to, graphite, soft carbon, hard carbon that has a porous structure, or carbon with another porous structure.

That the silicon particles are attached to the pore walls of the porous carbon means that the silicon particles are attached to the pore walls of the porous carbon and a space of each pore is not filled with the silicon particles. That is, the porous carbon having the silicon particles attached to the pore walls still has voids.

That the crystal phase exists in the silicon particles and the degree of crystallinity is at least 90% means that the silicon particles are all in the crystal phase. In this case, the silicon particles are all crystalline silicon, or the silicon particles are a mixture of a crystal phase and an amorphous phase, where a mass proportion that the crystal phase accounts for is at least 90%. The degree of crystallinity may be calculated based on a characteristic peak of the silicon in the Raman spectrum of the silicon-carbon negative electrode material. Specifically, the degree of crystallinity may be calculated by dividing an area that represents a Raman peak value of the crystalline silicon in the silicon particles by an area that represents a Raman peak value of overall silicon including the crystal phase and the amorphous phase in the silicon particles.

Exemplarily, the degree of crystallinity is any value of or between any two values of 90%, 92%, 93%, 95%, 96%, 97%, 98%, 99%, and 100%.

The average grain size of the silicon particles here means an average size of the crystalline silicon in the silicon particles. Due to the existence of the crystal phase in the silicon particles and the degree of crystallinity of at least 90%, namely, since most of the silicon particles are crystalline silicon which has anisotropy during expansion, making the average grain size of the silicon particles less than 4 nm can relieve the anisotropy of the crystalline silicon during expansion.

An XRD pattern of a sample may be tested according to a testing standard JIS/K0131-1996. According to the XRD pattern of the sample, a full width at half maximum $\beta$ and a diffraction angle $\theta$ of a Si (111) crystal plane diffraction peak are used and substituted into Debye-Scherrer equation for calculation to obtain the average grain size of the silicon particles. Debye-Scherrer equation is $Dhkl=k\ \lambda/\beta\cos\theta$, where Dhkl represents the average grain size of the silicon particles, in a unit of nm; k represents a Scherrer constant, which is 0.89; $\lambda$ represents a wavelength of an incident X-ray, which is 0.15406 nm; $\beta$ represents the full width at half maximum of the diffraction peak, in a unit of rad; and $\theta$ represents the diffraction angle, in a unit of degrees.

Exemplarily, the average grain size of the silicon particles includes, but is not limited to, any value of 1 nm, 1.5 nm, 2 nm, 2.5 nm, 3 nm, 3.5 nm, 3.9 nm, and the like.

In the silicon-carbon negative electrode material provided in the present application, due to the existence of the crystal phase (i.e. crystalline silicon) in the silicon particles and the degree of crystallinity of at least 90%, first coulombic efficiency of a battery can be effectively improved compared with first coulombic efficiency of amorphous silicon. By attaching the silicon particles to the pore walls of the porous carbon and making the average grain size of the silicon particles less than 4 nm, in one aspect, differences in expansion forces of the crystalline silicon in directions are relieved and reduced by using the limitation on the average size, which is conductive to relieving and improving cycling stability of the battery. In another aspect, each pore can reserve some space to buffer volume expansion of the silicon particles. This can further improve cycling performance of the battery.

That is, the silicon-carbon negative electrode material provided in the present application can enable the battery to obtain both good cycling stability and high first coulombic efficiency.

In some implementations, the average grain size of the silicon particles is less than 2 nm.

Within the above range, it is conductive to further reducing the differences in the expansion forces of the crystalline silicon in the directions and improving the cycling performance of the battery.

In some implementations, an average pore size of the porous carbon is less than or equal to 4 nm.

The porous carbon may include a crack pore, a conical pore, a barrel-shaped pore, a spherical shape, and the like in terms of pore shapes, and some pores are irregular. Therefore, a pore size here is defined as a distance between two farthest points on a pore wall surface of a pore.

It can be understood that in the disposing manner of attaching the silicon particles to the pore walls of the porous carbon, that is, using the pore size of the porous carbon, it is conducive to limiting a size of the silicon particles. A maximum grain size of the silicon particles is inevitably less than the pore size of the porous carbon, and the average grain size of the silicon particles is also less than the average pore size of the porous carbon, thereby leaving a space to relieve expansion after deposition.

Therefore, since the average pore size of the porous carbon is less than or equal to 4 nm, in one aspect, the average grain size of the silicon particles can be effectively limited to be less than 4 nm, which is conductive to improving the cycling performance; and in another aspect, under the same volume, a larger pore size indicates a lower porosity, causing a concentrated distribution of the pores. Therefore, when the average pore size of the porous carbon is less than or equal to 4 nm, the pores are basically uniformly distributed on the porous carbon, which facilitates uniform distribution of the silicon particles in the silicon-carbon negative electrode material, thereby improving the cycling performance of the battery.

Optionally, the average pore size of the porous carbon is less than or equal to 2 nm.

Within the above range, the average grain size of the silicon particles can be effectively limited to be less than 2 nm, and it is conducive to the uniform distribution of the silicon particles in the silicon-carbon negative electrode material, thereby improving the cycling performance of the battery.

In some implementations, the porous carbon satisfies at least one of the following features:

(a1) The porous carbon has a micropore, a mesopore, and a macropore, and a volume proportion that the micropore accounts for is greater than or equal to 75%.

The micropore, the mesopore, and the macropore are distinguished based on their pore sizes. A pore with a pore size less than 2 nm is referred to as the micropore. A pore with a pore size greater than 50 nm is referred to as the macropore. A pore with a pore size of 2 to 50 nm is referred to as the mesopore (or referred to as a meso pore).

More pores correspond to a larger pore volume. Therefore, the volume proportion is used to reflect a quantity of micropores, namely, a proportion of the micropore further limits the quantity of micropores based on the average pore size. According to the description of the pore size distribution, the micropores can better limit the sizes of the silicon particles and promote uniform distribution of silicon inside the material. Therefore, making the volume proportion greater than or equal to 75% is conductive to further relieving the expansion and improving the cycling performance of the battery.

Exemplarily, the volume proportion that the micropore accounts for includes, but is not limited to, any value of 75%, 80%, 85%, 90%, 95%, and the like.

(a2) A specific surface area of the porous carbon is greater than or equal to 1700 $m^2/g$.

Within the above range of the specific surface area, it is conducive to depositing the silicon particles in the pores of the porous carbon and improving the first discharge capacity and cycling performance of the battery.

(a4) A pore volume of the porous carbon is greater than or equal to 0.75 $m^3/g$.

The pore volume refers to a total volume of the pores of the porous carbon per unit mass. The pore volume of the porous carbon corresponds to a deposition amount of the silicon particles.

By limiting the pore volume of the porous carbon to be greater than 0.75 $m^3/g$, it is conductive to depositing a target amount of silicon into the porous carbon to increase the capacity of the silicon-carbon negative electrode material. After the target amount of silicon is deposited, the porous carbon still has sufficient voids to buffer the volume expansion of the silicon particles, thereby improving the first discharge capacity and cycling performance of the battery.

In some implementations, the porous carbon satisfies at least one of the following features:

(b1) The porous carbon has a micropore, a mesopore, and a macropore, and a volume proportion that the micropore accounts for is greater than 85%.

Since the volume proportion that the micropore accounts for is greater than 85%, it is conductive to prompting uniform distribution of silicon in the material, thereby relieving the expansion and improving the cycling performance

(b2) A specific surface area of the porous carbon is greater than 1800 $m^2/g$.

Within the above range of the specific surface area, it is conducive to depositing the silicon particles in the pores of the porous carbon, which further improves the capacity and cycling performance of the battery.

(b3) A pore volume of the porous carbon is greater than 0.8 $m^3/g$.

Within the above range, it is conductive to further improving the capacity and cycling performance of the battery.

In some implementations, the porous carbon and the silicon particles are both used as a body, and the silicon-carbon negative electrode material further includes a carbon coating layer that coats the body.

The silicon particles have high activity. The carbon coating layer is used to coat a surface of the body. In one aspect, pores are sealed to obtain sealed pores, thereby preventing an external electrolyte from entering the internal pores, reducing the specific surface area, and reducing a loss of active lithium during formation of an SEI film on a surface of the silicon-carbon negative electrode material. In another aspect, this can prevent problems such as a decrease in the first coulombic efficiency of the battery due to a capacity loss caused by oxidization of silicon on the surface of the material.

In some implementations, the carbon coating layer implements discontinuous coating, and a thickness of the carbon coating layer is 1 nm to 40 nm.

Exemplarily, a method for testing the thickness of the carbon layer is: embedding a negative electrode active material with epoxy resin, carrying out curing, then cutting the material into a size of 50 nm to 70 nm by using ultramicrotomy, and preparing a sample. A high-resolution transmission electron microscope (TEM) is used to select a section of a particle sample for observation of a pore region and a disordered carbon layer region. The pore region and the disordered carbon layer region form the body, and an outermost disordered part of the entire body is a carbon shell. The

material is photographed and observed by using the TEM. Image analysis software Image J is then used to randomly select 10 negative electrode material particles from a photo to obtain thicknesses of outermost disordered parts (the carbon coating layer) of these negative electrode material particles. An average thickness of the outermost disordered parts of the 10 negative electrode material particles is used as the thickness of the carbon coating layer.

Within the above thickness range, the carbon coating layer not only allows lithium to diffuse through it but also effectively coats the body.

In some implementations, the silicon-carbon negative electrode material satisfies at least one of the following features:

(c1) Mass content of the silicon particles in the silicon-carbon negative electrode material ranges from 35% to 55%.

The silicon content determines the capacity of the material. Small content may lead to low capacity of the material, but large content may lead to a lower residual porosity of the material, which cannot effectively control the expansion of silicon-carbon negative electrode material.

Therefore, since the mass content of the silicon particles in the silicon-carbon negative electrode material ranges from 35% to 55%, the first discharge capacity, cycling performance, and first coulombic efficiency of the battery can be improved together.

Exemplarily, the mass content of the silicon particles in the silicon-carbon negative electrode material is any value of or between any two values of 35%, 38%, 40%, 43%, 45%, 48%, 50%, 53%, and 55%.

(c2) A porosity of the silicon-carbon negative electrode material ranges from 40% to 60%.

If porous carbon with the same parameters and a low porosity is used, the purpose of controlling expansion cannot be well achieved, thereby affecting the cycling performance of the material. If the porosity is high, in one aspect, the capacity of the silicon-carbon negative electrode material will be low due to a small deposition amount of silicon, and in another aspect, the structure will be unstable, and there is a risk of fracturing the silicon-carbon negative electrode material during cold pressing. Therefore, by using the porosity of 40% to 60% of the silicon-carbon negative electrode material, the battery can have good capacity and cycling performance and high first coulombic efficiency.

Exemplarily, the porosity of the silicon-carbon negative electrode material is any value of or between any two values of 40%, 43%, 45%, 47%, 50%, 53%, 55%, 57%, and 60%. (c3) A specific surface area of the silicon-carbon negative electrode material is less than or equal to 6 $m^2/g$.

By controlling the specific surface area of the silicon-carbon negative electrode material to be less than or equal to 6 $m^2/g$, a problem that the battery has low first coulombic efficiency and deteriorated cycling performance due to an excessive loss, caused by a large specific surface area, of the active lithium during the formation of the SEI film on the surface of the silicon-carbon negative electrode material is avoided.

Exemplarily, the specific surface area of the silicon-carbon negative electrode material includes, but is not limited to, 6 $m^2/g$, 5 $m^2/g$, 4 $m^2/g$, 3 $m^2/g$, 2 $m^2/g$, 1 $m^2/g$, 0.5 $m^2/g$, or the like.

(c4) A volume particle size distribution Dv50 of the silicon-carbon negative electrode material ranges from 4 μm to 15 μm.

The volume particle size distribution Dv50 refers to a particle size distribution parameter determined based on a measured value of particle size distribution. For example, the volume particle size distribution Dv50 is determined by using a particle size analyzer-laser diffraction method, and specifically, may be measured by using a laser diffraction-scattering particle size analyzer with reference to the standard GB/T 19077-2016.

Within the above range, it is conductive to enabling the battery to have good cycling performance, first coulombic efficiency and fast charge performance together.

Exemplarily, the volume particle size distribution Dv50 of the silicon-carbon negative electrode material is any value of or between any two values of 4 μm, 5 μm, 7 μm, 8 μm, 9 μm, 10 μm, 12 μm, 13 μm, and 15 μm.

In some implementations, the silicon-carbon negative electrode material satisfies at least one of the following features:

(d1) the mass content of the silicon particles in the silicon-carbon negative electrode material ranges from 40% to 50%;
(d2) a porosity of the silicon-carbon negative electrode material ranges from 45% to 55%;
(d3) a specific surface area of the silicon-carbon negative electrode material is less than 4 $m^2/g$; and
(d4) a volume particle size distribution Dv50 of the silicon-carbon negative electrode material ranges from 5 μm to 10 μm.

By the above parameter limitations, it is conductive to improving the capacity, cycling performance, and first coulombic efficiency of the battery.

In some implementations, the present application further provides a preparation method for the above silicon-carbon negative electrode material, including: depositing the silicon particles on the porous carbon by using a chemical vapor deposition method.

An average pore size of the porous carbon is less than or equal to 4 nm.

In the above preparation method, the silicon particles are deposited on the porous carbon by using the chemical vapor deposition method. The silicon particles are deposited into pores of the porous carbon, so a maximum grain size of the silicon particles is less than a pore size of the porous carbon, and an average grain size of the silicon particles is less than the average pore size of the porous carbon. Therefore, by using the average pore size of the porous carbon that is less than or equal to 4 nm, the average grain size of the silicon particles can be controlled to be less than 4 nm. This enables the battery to obtain both good cycling stability and high first coulombic efficiency after the obtained silicon-carbon negative electrode material is applied to a battery.

In some implementations, a manner of depositing the silicon particles on the porous carbon by using a chemical vapor deposition method includes:

placing the porous carbon in a reaction atmosphere and carrying out heat preservation reaction at 400°C to 550°C for at least 8 h. The reaction atmosphere is a mixed atmosphere of a protective gas and a silicon source gas. A gas flow ratio of the protective gas to the silicon source gas is 90:10 to 70:30. The protective gas includes at least one of an inert gas and hydrogen.

The inert gas includes, but is not limited to, nitrogen, argon, and the like.

The silicon source gas includes, but is not limited to, one or more of siliconcontaining hydrocarbons such as silane, dichlorosilane, trichlorosilane, and tetrachlorosilane.

It can be understood that the manner of depositing the silicon particles on the porous carbon by using the chemical vapor deposition method may be carried out in a heating chamber of a vapor deposition furnace. The porous carbon can be placed in the heating chamber of the vapor deposition furnace, and then the heating chamber is vacuumized by using a vacuum pump. Then, the inert gas is introduced into the heating chamber to avoid interference caused by impurities. After the heating chamber is full of the inert gas, a mixed gas is introduced based on the gas flow ratio of the protective gas to the silicon source gas of 90:10 to 70:30. While the mixed gas is introduced, a temperature of the heating chamber of the vapor deposition furnace is raised to 400°C to 550°C to decompose the silicon source gas to obtain silicon, and the silicon is deposited in the pore channels of the porous carbon. The mixed gas is continuously introduced into the heating chamber of the vapor deposition furnace, and the heat preservation reaction is carried out for at least 8 h by maintaining a pressure in the heating chamber of the vapor deposition furnace at a normal pressure.

A large proportion of the silicon source gas in the mixed gas can lead to a high silicon deposition rate, causing nano silicon particles to be easily agglomerated. The agglomerated silicon particles easily block the pore channels. As a result, less silicon is deposited in a center part of the porous carbon, which causes non-uniform distribution of the silicon particles inside. Consequently, the silicon-carbon negative electrode material has severe local expansion during cycling, making it easy to crack and break. This affects the structural stability of the silicon-carbon negative electrode material. A small proportion of the silicon source gas in the mixed gas can lead to a low deposition rate and low process efficiency. Therefore, the gas flow ratio of the protective gas to the silicon source gas is 90:10 to 70:30. Exemplarily, the gas flow ratio of the protective gas to the silicon source gas is any value of or between any two values of 90:10, 89:11, 85:15, 83:17, 80:20, 77:23, 75:25, 73:27, 71:29, and 70:30.

A heat preservation temperature affects the decomposition of the silicon source gas and components obtained. At 400°C, the silicon source gas begins to be decomposed into amorphous silicon. At a lower temperature, silane cannot be decomposed and the silicon deposition process cannot be carried out. In one aspect, a high temperature can easily lead to a high decomposition rate, which can easily block the pores and make the silicon non-uniformly distributed inside the material. In another aspect, a high temperature can cause a reaction between nano silicon and a carbon substrate to produce silicon carbide which cannot provide capacity, thus leading to a material capacity loss. Therefore, the heat preservation temperature ranges from 400°C to 550°C. Exemplarily, the temperature of the heat preservation reaction is any value of or between any two values of 400°C, 430°C, 450°C, 460°C, 470°C, 500°C, 530°C, and 550°C.

Since the capacity of the silicon-carbon negative electrode material is mainly provided by the silicon particles, if the heat preservation duration is short, a small number of silicon particles are deposited, and the capacity of the silicon-carbon negative electrode material is low. The short heat preservation duration is not conducive to generation of crystalline silicon. If the heat preservation duration is long, a large number of silicon particles are deposited. In one aspect, it leads to a low residual porosity of the silicon-carbon negative electrode material, which cannot meet a requirement of reducing expansion by reserving pores. In another aspect, when the pore channels are full of the nano silicon particles, silicon can be deposited on the surface of the material to form a silicon-rich layer. Expansion of silicon on the surface cannot be limited because the silicon is not limited by a substrate framework of the porous carbon. Therefore, there is severe expansion during cycling, and the surface of the material easily cracks to form a thick byproduct layer. Once the byproduct layer is excessively thick, the silicon-carbon negative electrode material can lose its activity and not participate in the cycling process, and the cycling performance is affected. Thus, the heat preservation duration is at least 8 h.

In the chemical vapor deposition method provided in the present application, the used porous carbon has a small pore size, so that the temperature, the gas ratio, and the heat preservation duration need to be adjusted to be within the above ranges. By adjusting the temperature, the gas ratio, and the heat preservation duration to be within the above range, to control decomposition efficiency and a deposition rate of the silicon source gas, in one aspect, it is conductive to

uniformly distributing the silicon particles in the pore channels of the porous carbon. In another aspect, it is conductive to generating the crystalline silicon and suppressing generation of non-capacitive silicon carbide or excessive amorphous silicon.

In some implementations, a temperature of the heat preservation reaction ranges from 430°C to 530°C.

The above range is conducive to forming crystalline silicon and is conductive to improving the capacity and first coulombic efficiency of the battery.

In some implementations, the gas flow ratio of the protective gas to the silicon source gas is 85:15 to 75:25.

Within the above range, it is conductive to improving the cycling performance of the battery.

In some implementations, duration of the heat preservation reaction ranges from 8 h to 16 h.

Optionally, the duration of the heat preservation reaction ranges from 10 to 16 h.

within the above range, the battery can achieve high capacity, improved cycling stability, and high first coulombic efficiency.

In some implementations, the preparation method further includes: using a product obtained by depositing the silicon particles on the porous carbon as a body, placing the body in a mixed atmosphere of a carbon source and an inert gas, and pyrolyzing the carbon source to form a carbon coating layer that coats the body. The carbon source includes one or more of an alkane, an alkyne, and an alkene.

The inert gas includes, but is not limited to, nitrogen or argon.

The alkane includes, but is not limited to, methane. The alkene includes, but is not limited to, ethylene. The alkyne includes, but is not limited to, acetylene.

By the above disposing mode, the carbon coating layer that coats a surface of the body can be formed. By the disposing of the carbon coating layer, the specific surface area is reduced to improve stability of a material interface, and a loss of the first coulombic efficiency caused by the oxidation of silicon on the surface of the material into silicon dioxide can be mitigated.

If a temperature of pyrolyzing the carbon source is low, the carbon source cannot be decomposed and cannot effectively coat the surface of the body. A high temperature can easily cause the deposited silicon particles to react with the porous carbon to form silicon carbide, resulting in a material capacity loss. Short duration of pyrolyzing the carbon source leads to a small carbon coating amount, which fails to fully cover the surface of the body and therefore cannot effectively reduce the specific surface area. To ensure a coating effect, a carbon coating temperature is relatively high, which poses a risk of generating silicon carbide. Therefore, long coating time easily promotes formation of silicon carbide, resulting in a capacity loss.

In some implementations, a temperature of pyrolyzing the carbon source ranges from 400°C to 800°C, and pyrolysis duration ranges from 0.2 h to 2 h.

By controlling the temperature of pyrolyzing the carbon source and the pyrolysis duration, the carbon coating layer can fully cover the surface of the body to reduce the specific surface area, and the formation of silicon carbide can be mitigated, thereby effectively improving the capacity and cycling performance of the battery.

Exemplarily, the temperature of the pyrolyzing the carbon source is any value of or between any two values of 400°C, 450°C, 500°C, 550°C, 600°C, 650°C, 700°C, 750°C, and 800°C.

Exemplarily, the pyrolysis duration is any value of or between any two values of 0.2 h, 0.5 h. 0.7 h, 1 h, 1.2 h, 1.5 h, 1.7 h, and 2 h.

In some implementations, a gas flow ratio of the inert gas to the carbon source is 1:(1.5 to 5).

By controlling the gas flow ratio of the inert gas to the carbon source within the above range, in one aspect, the coating efficiency is effectively improved. In another aspect, it is convenient to control the decomposition rate of the carbon source and relieve its localized enrichment, and it is conductive to obtaining a coating layer with a uniform thickness and improving the cycling performance and first coulombic efficiency of the battery.

According to some embodiments of the present application, the present application further provides a negative electrode plate, including the silicon-carbon negative electrode material of any of the above solutions.

According to some embodiments of the present application, the present application further provides a battery, including the negative electrode plate of any of the above solutions.

According to some embodiments of the present application, the present application further provides a power consuming apparatus, including the battery of any of the above solutions. The battery is configured to provide electric energy.

Some specific embodiments are listed below to better explain the present application.

In the following embodiments and comparative examples, measurement modes for relevant parameters of porous carbon are as follows:

[Average pore size, pore volume, and micropore proportion of the porous carbon]

A pore size is measured by a gas adsorption method in accordance with standards

GB/T19587-2017&GB/T21650.2-2008. Specifically, the porous carbon is used as a sample. A sample tube is immersed in liquid nitrogen at -196°C. Nitrogen is adsorbed onto a material to be tested under a relative pressure ranging from 0 to 1. A pore size distribution and pore volume of a porous material are characterized based on adsorption isotherms showing the relationship between pore volume at various pore sizes and corresponding partial pressures.

The micropore proportion can be calculated based on the pore size distribution of the porous material.

[Specific surface area of the porous carbon]

The specific surface area is measured by the gas adsorption method in accordance with the measurement standard GB/T19587-2017. Specifically, the porous carbon is used as a sample. A sample tube is immersed in liquid nitrogen at -196°C. Adsorption amounts, on a surface of a solid under different pressures, of nitrogen are measured under a relative pressure ranging from 0.05 to 0.30. A monolayer adsorption capacity of the sample is obtained based on a BET multilayer adsorption theory and equation, and a specific surface area of the solid is then calculated.

BET equation:

$$\frac{P/P_0}{n_a(1-P/P_0)} = \frac{1}{n_m C} + \frac{C-1}{n_m C}\frac{P}{P_0}$$

$n_a$ represents an amount of adsorbed gas, in a unit of mol/g; $P/P_0$ represents the relative pressure; and $n_m$ represents the adsorption amount of the monolayer adsorption capacity.

Embodiment 1

[Silicon-carbon negative electrode material]

(1) Place porous carbon shown in Table 1 into a heating chamber of a vapor deposition furnace and vacuumize the heating chamber by using a vacuum pump.
(2) Introduce nitrogen into the heating chamber, and after the heating chamber is full of protective gas, introduce a mixed gas at a gas flow ratio of the nitrogen to silane of 85:15. Raise a temperature of the heating chamber to 460°C while introducing the mixed gas, to decompose the silane into silicon which is deposited in pore channels of the porous carbon. Continuously introduce the mixed gas into the heating chamber, maintain a pressure in the heating chamber at a normal pressure, and carry out heat preservation on the heating chamber for 12 h, to obtain a body.
(3) Under a nitrogen atmosphere, first raise the temperature of the heating chamber to 660°C, then use acetylene as a carbon source, introduce the mixed gas at a gas flow ratio of the nitrogen to the acetylene of 1:2, carry out heat preservation on the heating chamber for 0.5 h, and perform carbon coating treatment on a surface of the body, to obtain a silicon-carbon negative electrode material. A synthesis process of the silicon-carbon negative electrode material is shown in Table 1.

[Performance test]

(1) Degree of crystallinity of silicon particles

The degree of crystallinity is calculated by dividing an area that represents a Raman peak value of crystalline silicon in the silicon particles by an area that represents a Raman peak value of overall silicon including a crystal phase and an amorphous phase in the silicon particles.

(2) XRD test and calculation of the average grain size

An XRD pattern of a sample may be tested according to a testing standard JIS/K0131-1996. According to the XRD pattern of the sample, a full width at half maximum $\beta$ and a diffraction angle $\theta$ of a Si (111) crystal plane diffraction peak are used and substituted into Debye-Scherrer equation for calculation to obtain a grain size of nano silicon grains. Debye-Scherrer equation is $Dhkl=k\ \lambda/\beta\cos\theta$, where Dhkl represents the grain size of the nano silicon grains, in a unit of nm; k represents a Scherrer constant, which is 0.89; $\lambda$ represents a wavelength of an incident X-ray, which is 0.15406 nm; $\beta$ represents the full width at half maximum of the diffraction peak, in a unit of rad; and $\theta$ represents the diffraction angle, in a unit of degrees.

(3) Measurement of the silicon content

Inductively coupled plasma (ICP) is used to measure the silicon content, specifically as follows: A carbon-silicon composite is used as a sample. The sample is digested with aqua regia and hydrofluoric acid (HF). A solution obtained by digestion is then used to test the silicon content.

(4) Test of the porosity of the silicon-carbon negative electrode material

The porosity is measured in accordance with a measurement standard GB/T24586, porosity P=(V2-V1)/V2*100% and apparent volume V2=S*H*A, where S represents an area, in a unit of $cm^2$; H represents a thickness, in a unit of cm; A represents a quantity of samples, in a unit of EA; V1 represents a true volume of a sample, in a unit of $cm^3$; and V2 represents the apparent volume of the sample, in a unit of $cm^3$.

(5) Preparation of a battery and test of related performance

[Preparation of a positive electrode plate]

Mix an 811-type high-nickel ternary material ($Li(Ni_{0.8}Co_{0.1}Mn_{0.1})O_2$), an acetylene black conductive agent, and a polyvinylidene fluoride (PVDF) binder at a weight ratio of 94:4:2, add an N-methyl pyrrolidone solvent, and sufficiently stir and uniformly mix them, to obtain positive electrode slurry. Apply the positive electrode slurry onto two surfaces of a positive electrode current collector aluminum foil, and carry out drying and cold pressing to obtain the positive electrode plate.

[Preparation of a negative electrode plate]

Mix the silicon-carbon negative electrode materials respectively prepared in the embodiments and the comparative examples, an acetylene black conductive agent, a styrene butadiene rubber (SBR) binder, and a carboxymethyl cellulose sodium (CMC-Na) thickener at a weight ratio of 95:1.5:3.1:0.4, add a deionized water solvent, and sufficiently stir and uniformly mix them, to obtain negative electrode slurry. Apply the negative electrode slurry onto two surfaces of a negative electrode current collector copper foil, and carry out drying and cold pressing obtain the negative electrode plate.

[Preparation of an electrolyte]

Add 0.6122 g of sodium perchlorate to 10 ml of a propylene carbonate solvent, stir them until the sodium perchlorate is completely dissolved, then add fluoroethylene carbonate with a mass fraction of 3% as an additive, and carry out sufficient stirring to obtain the electrolyte.

[Providing of a separator]

Use a polyethylene porous film as the separator.

[Assembling of a button battery]

Sequentially laminate the negative electrode plate and the separator that are prepared above, and a lithium metal sheet used as a positive electrode, to cause the separator to be located between the negative electrode plate and the lithium metal sheet to play a separation role. Impregnate the separator with the electrolyte prepared above, and then obtain the button battery by compaction.

[Assembling of a full battery]

Sequentially laminate the positive electrode plate, the separator, and the negative electrode plate, to cause the separator to be located between the positive electrode plate and the negative electrode plate to play a separation role, place them into an outer package after winding, inject the prepared electrolyte, and carry out procedures of packaging, liquid injection, formation, and degassing to obtain a lithium-ion battery.

A person skilled in the art can understand that in the above methods of the specific embodiments and comparative examples, the writing order of the respective step does not imply a strict execution order and imposes any restrictions on the implementation process. The specific execution order of the respective steps should be determined based on functions and possible internal logics of the steps.

[Test of the first coulombic efficiency of the button battery]

Test procedure: Under a normal temperature condition, make the battery stand for 3 h, then discharge the battery at a constant current of 0.05 C to a voltage of 0.005 V, further discharge the battery at a constant current of 50 μA to a voltage of 0.005 V, and record a capacity at this time as a lithiation capacity. Make the battery stand for 5 min, then charge the battery at a rate of 0.1 C to a voltage of 2 V, and record a capacity at this time as a delithiation capacity.

The first coulombic efficiency (%) of the silicon-carbon negative electrode material=(lithium-deintercalated capacity/lithium-intercalated capacity)*100%.

[Test of the cycling performance and first discharge capacity of the full battery]

Test of normal-temperature cycling performance:

Test conditions: Under a normal temperature condition, make the battery stand for 30 min, then charge the battery at a rate of 0.5 C to a voltage of 4.2 V, further charge the battery at a constant voltage of 4.2 V to a current of 0.05 C, make the battery stand for 5 min, and then discharge the battery at the rate of 0.5 C to a voltage of 2.8 V. This is a charge and discharge cycle process. Record a discharge capacity at each cycle, where a capacity retention rate (%) after n cycles=(a discharge capacity of an $n^{th}$ cycle/a discharge capacity of a first cycle) × 100%. When the discharge capacity of the battery decays to 80% of the discharge capacity of the first cycle, stop the test and record a number of cycles of the battery.

Test results are shown in Table 3.

Embodiments 2 to 17 and comparative examples 1 to 2

Differences between the porous carbon in the embodiments, as well as the comparative examples, and the porous carbon in Embodiment 1 are shown in Table 1. Differences in preparation process parameters are shown in Table 1. Test results of the obtained silicon-carbon negative electrode materials and the assembled batteries are shown in FIG. 2.

Table 1 Selection and preparation process parameters of the porous carbon

| | Porous carbon | | | | Material synthesis process | | | | | |
|---|---|---|---|---|---|---|---|---|---|---|
| | | | | | Silicon deposition | | | Carbon coating | | |
| | Average pore size, nm | Micropore proportion, % | BET, $m^2g$ | volume, Pore $cm^3g$ | Temperature, °C | Nitrogen: silane | preservation Heat duration, h | Temperature, °C | Nitrogen: ethyne | preservation Heat duration, h |
| Embodiment 1 | 1.7 | 86.20% | 2027 | 0.87 | 460 | 85:15 | 12 | 660 | 1:2 | 0.5 |
| Embodiment 2 | 1.7 | 86.20% | 2027 | 0.87 | 460 | 85:15 | 12 | / | | |
| Embodiment 3 | 3.8 | 80.10% | 1830 | 0.72 | 470 | 85:15 | 10 | 660 | 1:2 | 0.5 |
| Embodiment 4 | 3.0 | 82.40% | 1952 | 0.79 | 470 | 85:15 | 11 | 660 | 1:2 | 0.5 |
| Embodiment 5 | 1.7 | 86.20% | 2027 | 0.87 | 400 | 85:15 | 12 | 680 | 1:2 | 0.5 |
| Embodiment 6 | 1.7 | 86.20% | 2027 | 0.87 | 430 | 85:15 | 12 | 660 | 1:2 | 0.5 |
| Embodiment 7 | 1.7 | 86.20% | 2027 | 0.87 | 550 | 85:15 | 12 | 660 | 1:2 | 0.5 |
| Embodiment 8 | 1.7 | 86.20% | 2027 | 0.87 | 530 | 85:15 | 12 | 660 | 1:2 | 0.5 |
| Embodiment 9 | 2.3 | 85.10% | 1966 | 0.85 | 460 | 80:20 | 12 | 660 | 1:2 | 0.5 |
| Embodiment 10 | 1.7 | 86.20% | 2027 | 0.87 | 460 | 90:10 | 12 | 660 | 1:2 | 0.5 |
| Embodiment 11 | 2.6 | 84.50% | 1901 | 0.81 | 460 | 70:30 | 12 | 660 | 1:2 | 0.5 |
| Embodiment 12 | 1.7 | 86.20% | 2027 | 0.87 | 460 | 85:15 | 8 | 660 | 1:2 | 0.5 |
| Embodiment 13 | 1.6 | 88.20% | 2248 | 0.91 | 460 | 85:15 | 16 | 660 | 1:2 | 0.5 |
| Embodiment 14 | 1.7 | 86.20% | 2027 | 0.87 | 460 | 85:15 | 12 | 800 | 1:2 | 0.5 |
| Embodiment 15 | 1.7 | 86.20% | 2027 | 0.87 | 460 | 85:15 | 12 | 850 | 1:2 | 0.5 |
| Embodiment 16 | 1.7 | 86.20% | 2027 | 0.87 | 460 | 85:15 | 12 | 660 | 1:1.5 | 0.5 |
| Embodiment 17 | 1.7 | 86.20% | 2027 | 0.87 | 460 | 85:15 | 12 | 660 | 1:5 | 0.5 |
| Comparative example 1 | 10.32 | 3.20% | 148 | 0.38 | 460 | 85:15 | 12 | 660 | 1:2 | 0.5 |
| Comparative example 2 | 1.8 | 76.90% | 1600 | 0.76 | 435 | 80:20 | 7 | 500 | 1:2 | 0.5 |

In Table 1, nitrogen: silane refers to the gas flow ratio of nitrogen to silane, and nitrogen: acetylene refers to the gas flow ratio of nitrogen to acetylene.

Table 2 Test results

| | Average silicon grain size, nm | Degree of crystallinity | Silicon mass content | Porosity | Specific surface area, $m^2g$ | First discharging capacity, mAh.g | First coulombic efficiency, % | Number of cycles |
|---|---|---|---|---|---|---|---|---|
| Embodiment 1 | 1.5 | 98.5% | 42.5% | 53.6% | 2.8 | 1623 | 88.7% | 1608 |
| Embodiment 2 | 1.5 | 98.1% | 43.2% | 53.2% | 5.3 | 1577 | 87.4% | 1566 |
| Embodiment 3 | 3.4 | 97.2% | 42.2% | 50.1% | 2.1 | 1645 | 88.1% | 1398 |
| Embodiment 4 | 2.7 | 97.8% | 42.0% | 51.3% | 2.4 | 1631 | 88.2% | 1438 |
| Embodiment 5 | 1.2 | 90.4% | 38.2% | 56.3% | 3.7 | 1581 | 86.9% | 1742 |
| Embodiment 6 | 1.3 | 93.6% | 39.9% | 55.9% | 3.0 | 1598 | 87.8% | 1675 |
| Embodiment 7 | 1.6 | 99.2% | 44.2% | 49.2% | 2.5 | 1692 | 89.3% | 1502 |
| Embodiment 8 | 1.5 | 98.1% | 43.1% | 50.9% | 2.7 | 1661 | 89.0% | 1565 |
| Embodiment 9 | 1.7 | 97.9% | 44.2% | 50.4% | 2.6 | 1703 | 86.2% | 1487 |
| Embodiment 10 | 1.5 | 98.3% | 40.3% | 55.1% | 3.0 | 1506 | 89.1% | 1632 |
| Embodiment 11 | 1.9 | 98.1% | 46.8% | 48.2% | 2.7 | 1755 | 87.3% | 1432 |
| Embodiment 12 | 1.3 | 97.3% | 37.9% | 58.1% | 4.6 | 1488 | 85.5% | 1758 |
| Embodiment 13 | 1.4 | 98.9% | 46.8% | 43.7% | 1.8 | 1792 | 89.1% | 1539 |
| Embodiment 14 | 1.5 | 98.9% | 42.3% | 53.7% | 2.5 | 1641 | 88.9% | 1598 |
| Embodiment 15 | 1.5 | 99.1% | 42.1% | 53.5% | 2.4 | 1532 | 87.1% | 1511 |
| Embodiment 16 | 1.5 | 98.4% | 43.6% | 52.9% | 3.9 | 1602 | 88.2% | 1604 |
| Embodiment 17 | 1.5 | 98.6% | 40.9% | 53.3% | 1.5 | 1611 | 88.5% | 1601 |
| Comparative example 1 | 8.2 | 98.4% | 45.0% | 52.0% | 1.2 | 1134 | 85.1% | 1105 |
| Comparative example 2 | - | - | 45.0% | 49.0% | 4.4 | 1655 | 83.3% | 1613 |

It can be learned with reference to Table 1 and Table 2 that the silicon-carbon negative electrode material provided in the embodiments of the present application has the crystal phase in the silicon particles and the degree of

crystallinity is at least 90%. Under the condition that the average grain size of the silicon particles is less than 4 nm, when the silicon-carbon negative electrode material is applied to a battery, the battery can have high capacity, good cycling stability, and high first coulombic efficiency.

According to Embodiment 1 and Embodiment 2, it can be seen that the BET of the silicon-carbon negative electrode material prepared in Embodiment 2 is slightly greater than that in Embodiment 1 since no carbon coating is carried out in Embodiment 2. Moreover, since no carbon coating is carried out, a particular amount of silicon oxide exists on a surface of the silicon-carbon negative electrode material prepared in Embodiment 2. The silicon oxide may consume active lithium and does not contribute to reversible capacity, so that the capacity and first coulombic efficiency of the material are lower than those in Embodiment 1, and the cycling performance is also slightly lower than that in Embodiment 1 under the impact of the first coulombic efficiency.

According to Embodiments 1, 3, and 4, it can be seen that compared with the product in Embodiment 1, the products in Embodiments 3 and 4 are mainly different that their silicon grain sizes increase and their porosities decrease. Therefore, under similar capacities and similar first coulombic efficiencies, the cycling performance in Embodiments 3 and 4 is slightly lower than that in Embodiment 1.

According to Embodiments 1 and 5 to 8, it can be seen that when the silicon deposition temperature ranges from 400°C to 550°C, especially from 430°C to 530°C, when the prepared silicon-carbon negative electrode materials are applied to batteries, the batteries have high capacity, good cycling stability, and high first coulombic efficiency.

According to Embodiments 1 and 9 to 11, it can be seen that when the gas flow ratios of the protective gas to the silicon source gas is 90:10 to 70:30, the batteries have good capacity, coulombic efficiency, and cycling performance.

According to Embodiments 1, 12, and 13, it can be seen that the deposition duration affects the degree of crystallinity and the cycling performance. In Embodiment 12, the deposition duration is shortened, so that less silicon is deposited. Moreover, under the same process conditions, it can be seen that the degree of crystallinity slightly increases with the increase of the deposition duration. The decrease in the degree of crystallinity leads to a decrease in the capacity, thus causing the first coulombic efficiency to decrease. However, the low first coulombic efficiency and the high porosity result in reduced expansion, thus improving the cycling performance. Compared with Embodiment 1, in Embodiment 13, due to the increase in the deposition duration, the degree of crystallinity is slightly higher and the capacity is increased. However, the porosity is lower than that in Embodiment 1, so that the cycling is poor.

According to Embodiments 1 and 14 to 15, it can be seen that the carbon coating temperature (i.e. the temperature of pyrolyzing the carbon source) affects the first coulombic efficiency and cycling performance of the battery. In Embodiment 14, the carbon coating temperature is 800°C. Due to the increase in the coating temperature compared with the coating temperature in Embodiment 1, the acetylene decomposition efficiency is improved, resulting in a decrease in the percentage of silicon and a decrease in the BET. However, the increase in the coating temperature leads to an increase in the degree of crystallinity, the expansion of the silicon grains is stronger in orientation, which means that the overall expansion of the silicon-carbon negative electrode material increases. Therefore, the cycling performance is slightly reduced compared with that in Embodiment 1. In Embodiment 15, due to the high carbon coating temperature, silicon carbide is generated, so that losses occur in both the first discharge capacity and the first coulombic efficiency of the battery. Moreover, the high temperature further increases the degree of crystallinity, and the cycling is slightly reduced.

According to Embodiments 1, 16, and 17, it can be seen that the gas flow ratio in the carbon coating process mainly affects the thickness of the carbon coating layer on the surface of the finished product. When the gas flow ratio of the inert gas to the carbon source is 1:(1.5 to 5), as the flow of the acetylene increases and the thickness of the carbon coating layer increases, the BET decreases. Meanwhile, under the impact of the increased carbon coating layer, the silicon content slightly decreases, which has no significantly impact on the capacity, the first coulombic efficiency, the porosity, and the degree of crystallinity, so that the cycling is basically not affected.

Since the nano silicon particles are easily agglomerated, if there is no limitation by a framework, the nano silicon particles can expand freely without restrictions. Therefore, according to Embodiment 1 and Comparative Embodiment 1, in Comparative Embodiment 1, the porous carbon has a large average pore size and a small number of micropores, so that a final product has a large average silicon grain size under the same deposition conditions. The large average silicon grain size can lead to an increase in differences of the expansion forces of the silicon in the directions. As a result, the number of cycles is significantly reduced. Furthermore, in Comparative Embodiment 1, the carbon substrate has a large number of mesopores and a large number of macropores. In a case of ensuring the same porosity level, the product in Comparative Embodiment 1 is lower in pressure resistance. In the cold pressing process, the material partially cracks. Therefore, the battery has low first coulombic efficiency.

According to Embodiment 1 and Comparative Embodiment 2, in Comparative Embodiment 2, in the silicon deposition process, amorphous silicon is generated due to silicon deposition parameters. As a result, the first coulombic efficiency of the material is significantly reduced.

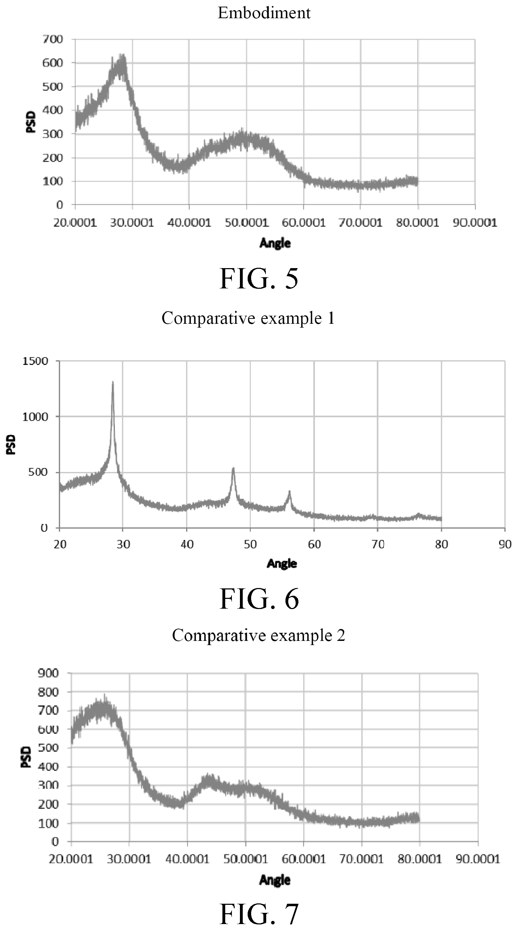

FIG. 5 is an XRD pattern of the silicon-carbon negative electrode material provided in Embodiment 1. FIG. 6 is an XRD pattern of the silicon-carbon negative electrode material provided in Comparative example 1. FIG. 7 is an XRD pattern of a silicon-carbon negative electrode material provided in Comparative example 2.

In Comparative example 1, the crystalline silicon is deposited, and the silicon grain size is greater than that in Embodiment 1. Therefore, the peak between 28° and 29° is sharper. In Comparative example 2, the amorphous silicon is deposited. The XRD shows characteristic peaks of the carbon substrate, which are bulge-shaped. Especially, the top of the first bulge is smooth. Due to the existence of the crystalline silicon and the small silicon grain size in Embodiment 1, the characteristic peaks of the silicon are partially blocked by the peaks of the porous carbon. Therefore, the first peak in Embodiment 1 is slightly sharper than that in Comparative example 2.

It should be finally noted that: The foregoing embodiments are merely intended to describe the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to part or all technical features thereof. These modifications or replacements do not make the essence of the corresponding technical solutions depart from the scopes of the technical solutions of the various embodiments of the present application, and shall fall within the scopes of the claims and the specification of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

**1.** A silicon-carbon negative electrode material, comprising porous carbon and silicon particles attached to pore walls of the porous carbon, wherein a crystal phase exists in the silicon particles and a degree of crystallinity is at least 90%; and an average grain size of the silicon particles is less than 4 nm.

**2.** The silicon-carbon negative electrode material according to claim 1, wherein the average grain size of the silicon particles is less than 2 nm.

**3.** The silicon-carbon negative electrode material according to claim 1 or 2, wherein an average pore size of the porous carbon is less than or equal to 4 nm, and optionally, the average pore size of the porous carbon is less than or equal to 2 nm.

**4.** The silicon-carbon negative electrode material according to any one of claims 1 to 3, wherein the porous carbon satisfies at least one of the following features:

(a1) the porous carbon has a micropore, a mesopore, and a macropore, and a volume proportion that the micropore accounts for is greater than or equal to 75%;
(a2) a specific surface area of the porous carbon is greater than or equal to 1700 $m^2/g$; and
(a3) a pore volume of the porous carbon is greater than or equal to 0.75 $m^3/g$;

optionally, the porous carbon satisfies at least one of the following features:

(b1) the porous carbon has a micropore, a mesopore, and a macropore, and a volume proportion that the micropore accounts for is greater than or equal to 85%;
(b2) a specific surface area of the porous carbon is greater than or equal to 1800 $m^2/g$; and
(b3) a pore volume of the porous carbon is greater than or equal to 0.8 $m^3/g$.

**5.** The silicon-carbon negative electrode material according to any one of claims 1 to 3, wherein the porous carbon and the silicon particles are both used as a body, and the silicon-carbon negative electrode material further comprises a carbon coating layer that coats the body.

**6.** The silicon-carbon negative electrode material according to claim 5, wherein the carbon coating layer is discontinuously coated, and a thickness of the carbon coating layer ranges from 1 to 40 nm.

**7.** The silicon-carbon negative electrode material according to any one of claims 1 to 6, wherein the silicon-carbon negative electrode material satisfies at least one of the following features:

(c1) mass content of the silicon particles in the silicon-carbon negative electrode material ranges from 35 to 55%;
(c2) a porosity of the silicon-carbon negative electrode material ranges from 40% to 60%;

(c3) a specific surface area of the silicon-carbon negative electrode material is less than or equal to 6 $m^2/g$; and
(c4) a volume particle size distribution Dv50 of the silicon-carbon negative electrode material ranges from 4 μm to 15 μm.

**8.** The silicon-carbon negative electrode material according to any one of claims 1 to 6, wherein the silicon-carbon negative electrode material satisfies at least one of the following features:

(d1) mass content of the silicon particles in the silicon-carbon negative electrode material ranges from 40% to 50%;
(d2) a porosity of the silicon-carbon negative electrode material ranges from 45% to 55%;
(d3) a specific surface area of the silicon-carbon negative electrode material is less than or equal to 4 $m^2/g$; and
(d4) a volume particle size distribution Dv50 of the silicon-carbon negative electrode material ranges from 5 μm to 10 μm.

**9.** A preparation method for the silicon-carbon negative electrode material according to any one of claims 1 to 8, comprising:

depositing the silicon particles on the porous carbon by using a chemical vapor deposition method, wherein an average pore size of the porous carbon is less than or equal to 4 nm.

**10.** The preparation method according to claim 9, wherein a manner of depositing the silicon particles on the porous carbon by using the chemical vapor deposition method comprises:

placing the porous carbon in a reaction atmosphere and carrying out heat preservation reaction at 400°C to 550°C for at least 8 h, wherein the reaction atmosphere is a mixed atmosphere of a protective gas and a silicon source gas, a gas flow ratio of the protective gas to the silicon source gas is 90:10 to 70:30, and the protective gas comprises at least one of an inert gas and hydrogen;
optionally, a temperature of the heat preservation reaction ranges from 430°C to 530°C;
optionally, the gas flow ratio of the protective gas to the silicon source gas is 85:15 to 75:25; and
optionally, duration of the heat preservation reaction ranges from 8 h to 16 h, optionally, from 10 h to 16 h.

**11.** The preparation method according to claim 9 or 10, wherein the preparation method further comprises: using a product obtained through depositing the silicon particles on the porous carbon as a body, placing the body in a mixed atmosphere of a carbon source and the inert gas, and pyrolyzing the carbon source to form a carbon coating layer that coats the body, wherein

the carbon source comprises one or more of an alkane, an alkyne, and an alkene;
optionally, a temperature of pyrolyzing the carbon source ranges from 400°C to 800°C, and pyrolysis duration ranges from 0.2 h to 2 h; and
optionally, a gas flow ratio of the inert gas to the carbon source is 1:(1.5 to 5).

**12.** A negative electrode plate, comprising the silicon-carbon negative electrode material according to any one of claims 1 to 8.

**13.** A battery, comprising the negative electrode plate according to claim 12.

**14.** A power consuming apparatus, comprising the battery according to claim 13, wherein the battery is configured to provide electric energy.

1000
200
300
100
100
20
11
10
12

FIG. 1

FIG. 2

20
23
24
212
21
211
22

FIG. 3

221
2213
2211
2212

FIG. 4

Embodiment

PSD
700
600
500
400
300
200
100
0
20.0001
30.0001
40.0001
50.0001
60.0001
70.0001
80.0001
90.0001
Angle

FIG. 5

Comparative example 1

PSD
1500
1000
500
0
20
30
40
50
60
70
80
90
Angle

FIG. 6

Comparative example 2

PSD
900
800
700
600
500
400
300
200
100
0
20.0001
30.0001
40.0001
50.0001
60.0001
70.0001
80.0001
90.0001
Angle

FIG. 7

## INTERNATIONAL SEARCH REPORT

International application No.
**PCT/CN2024/095179**

**A. CLASSIFICATION OF SUBJECT MATTER**

H01M4/38(2006.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 硅, 碳, 多孔, 结晶度, 尺寸, 直径, 气相沉积, 硅烷, 库伦效率, silicon, carbon, porous, crystaline, size, diameter, vapor deposition, silane, coulombic efficiency

**C. DOCUMENTS CONSIDERED TO BE RELEVANT**

| Category* | Citation of document, with indication, where appropriate, of the relevant passages | Relevant to claim No. |
|---|---|---|
| X | CN 114695865 A (FARASIS ENERGY (GAN ZHOU) CO., LTD. et al.) 01 July 2022 (2022-07-01)<br>description, paragraphs 5-45, and figure 1 | 1-8, 12-14 |
| Y | CN 117038946 A (ANHUI DEEIOT ENERGY TECHNOLOGY CO., LTD.) 10 November 2023 (2023-11-10)<br>description, paragraphs 25-51 | 1-14 |
| Y | CN 117059765 A (JIANGMEN HARMONY INNOVATION NEW ENERGY MATERIAL CO., LTD.) 14 November 2023 (2023-11-14)<br>description, paragraphs 6-105 | 1-14 |
| Y | CN 116705989 A (SHANDONG SI-NANO MATERIALS TECHNOLOGY CO., LTD.) 05 September 2023 (2023-09-05)<br>description, paragraphs 4-34 | 1-14 |
| A | CN 114420998 A (DONGGUAN AMPEREX TECHNOLOGY LIMITED) 29 April 2022 (2022-04-29)<br>entire document | 1-14 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 August 2024** | **13 August 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

**INTERNATIONAL SEARCH REPORT**

International application No.
**PCT/CN2024/095179**

**C. DOCUMENTS CONSIDERED TO BE RELEVANT**

| Category* | Citation of document, with indication, where appropriate, of the relevant passages | Relevant to claim No. |
|---|---|---|
| A | CN 116799178 A (ZHEJIANG LICHEN NEW MATERIAL TECHNOLOGY CO., LTD.) 22 September 2023 (2023-09-22)<br>entire document | 1-14 |
| A | KR 20200100557 A (SK INNOVATION CO., LTD. et al.) 26 August 2020 (2020-08-26)<br>entire document | 1-14 |

Form PCT/ISA/210 (second sheet) (July 2022)

**INTERNATIONAL SEARCH REPORT**
**Information on patent family members**

International application No.
**PCT/CN2024/095179**

| Patent document cited in search report | | | Publication date (day/month/year) | Patent family member(s) | | | Publication date (day/month/year) |
|---|---|---|---|---|---|---|---|
| CN | 114695865 | A | 01 July 2022 | WO | 2023207996 | A1 | 02 November 2023 |
| CN | 117038946 | A | 10 November 2023 | | None | | |
| CN | 117059765 | A | 14 November 2023 | CN | 117059765 | B | 07 June 2024 |
| CN | 116705989 | A | 05 September 2023 | CN | 116705989 | B | 24 October 2023 |
| CN | 114420998 | A | 29 April 2022 | WO | 2023124315 | A1 | 06 July 2023 |
| | | | | EP | 4394949 | A1 | 03 July 2024 |
| CN | 116799178 | A | 22 September 2023 | CN | 116799178 | B | 05 July 2024 |
| KR | 20200100557 | A | 26 August 2020 | US | 2020266444 | A1 | 20 August 2020 |
| | | | | US | 11824195 | B2 | 21 November 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311523761
- GB 190772016 T
- GB 195872017 T
- GB 2165022008 T
- GB 24586 T